# EUROPÄISCHE PATENTSCHRIFT

(11) **EP 1 919 833 B1**
(45) Veröffentlichungstag und Bekanntmachung des Hinweises auf die Patenterteilung: **30.06.2010**
(21) Anmeldenummer: 06776841.6
(22) Anmeldetag: 15.08.2006
(51) Int. Cl.: C02F 3/12, C02F 3/30, C02F 9/14

(54) **VORRICHTUNG ZUR ABWASSERREINIGUNG**
WASTE WATER PURIFYING DEVICE
DISPOSITIF D'EPURATION DES EAUX USEES

(30) Priorität: 22.08.2005 SK 50672005
(43) Veröffentlichungstag der Anmeldung: 14.05.2008
(73) Patentinhaber: Penzes, Ladislav, Bac 930 30 (SK); Csefalvay, Juraj, 900 44 Tomasov (SK)
(72) Erfinder: Penzes, Ladislav, Bac 930 30 (SK); Csefalvay, Juraj, 900 44 Tomasov (SK)
(74) Vertreter: Litvakova, Edita
(86) Internationale Anmeldenummer: PCT/EP2006/008031
(87) Internationale Veröffentlichungsnummer: WO 2007/022899

(56) Entgegenhaltungen:
- WO-A-02/12133
- DE-A1- 4 307 288
- DE-A1- 19 916 381
- US-A- 3 886 065
- US-A- 4 505 813
- US-A- 5 989 428
- US-B1- 6 210 578

## Beschreibung

Die Erfindung betrifft eine Vorrichtung zur kontinuierlichen, biologischen Abwasserreinigung aus kleineren Wasserverschmutzungsquellen mit modifiziertem Belebungsverfahren, in welcher in einem Becken ein Belebtraum mit raumisolierten, anaeroben, anoxischen und oxischen Zonen vereinigt wird und ein Nachklärraum mit einem Retentionsraum vereinigt wird, mit einem bestehenden Kreislauf zwischen den Zonen des Belebtraums und zwischen dem Belebtraum und dem Nachklärraum.

Für die Reinigung von Schmutzwasser aus Quellen, die nicht an das öffentliche Kanalisationssystem angeschlossen werden können, dienen kleinere Abwasserkläranlagen. Die Abwasserreinigung aus kleineren Wasserverschmutzungsquellen ist ein kompliziertes Problem, denn man ist mit der Problematik der beträchtlichen Variabilität der Abwasserdurchflüsse und der Variabilität der Wasserverschmutzung aus diesen kleineren Quellen konfrontiert. In relativ kleinen Abschnitten des Sammelkanals kommt es nicht zum Ausgleich der Abwassermenge und Abwassergüte. Daher muss man die einzelnen technischen Stufen des Prozesses der Abwasserreinigung (Ausgleichbecken, mechanische und biologische Reinigung und eventuelle Nachreinigung) so anpassen, dass sie nicht überfordert werden und damit die notwendige Verweildauer und die Flächenbelastung im Nachklärraum nicht überschritten werden. Wenn keine Bedingungen für den Ausgleich von Qualität und Quantität des Abwasserdurchflusses geschaffen worden sind, so müssen diese Stufen bedeutend überdimensioniert werden. Abwasserreinigungsanlagen sind auf den Durchschnittsdurchfluss von Q₂₄ dimensioniert. Die stündliche Ungleichmäßigkeit des Durchflusses drückt ein weiterer dimensionierter Durchfluss aus, der stündliche Höchstdurchfluss Qmax.

In der Schrift DE4307288 wird eine Vorrichtung zur biologischen Abwasserreinigung beschrieben, die kein speziell abgesondertes Ausgleichbecken enthält. Der Durchflussausgleich erfolgt in einem Klärbecken, Belebtschlammbecken und Nachklärbecken, gegebenenfalls auch in einem Schlammfänger, also in der ganzen Abwasserreinigungsanlage. Für den Ausgleich der Abwassermenge wird das Schmutzwasser kontinuierlich aus dem Nachklärbecken abgepumpt. Wenn eine gewisse festgesetzte Untergrenze des Wasserspiegels im Nachklärbecken erreicht worden ist, wird das Abpumpen vorläufig eingestellt, bis auf Grund des Abwasserdurchflusses ein höherer Pegel erreicht worden ist.

Auch in der Schrift US 3 886 065 befindet sich in der beschriebenen Vorrichtung zur Abwasserreinigung kein speziell abgesondertes Ausgleichbecken; der Ausgleich erfolgt in einem Klärbecken, Belebtschlammbecken und Nachklärbecken. Das Abwasser aus dem Nachklärbecken wird durch eine unter dem Wasserspiegel liegende Ausflussleitung kontinuierlich abgepumpt.

In der Schrift DE 199 16 381 A1 wird eine kleinere Abwasserkläranlage für eine biologisch-chemische Reinigung beschrieben, in der der Ausgleich von Qualität und Quantität auch im Klärraum und Belebtraum erfolgt, wobei es aber nicht notwendig ist, die aufgefangene Abwassermenge in ein anderes Becken abzuleiten. Für das Abfangen höherer Zuflüsse wird das eigene Volumen dieser Becken verwendet. Abwasser aus der biologischen Reinigung wird mit einer Pumpe oder einem Pumpenpaar zu weiteren Reinigungsvorgängen abgepumpt und das bereits mit einem gleich bleibendem Durchfluss. Die Pumpenförderleistung ist so gewählt, dass sie höher als der tägliche Durchflussdurchschnitt, aber zugleich ausreichend niedrig ist, damit die Intervalle der Abschaltung der Pumpen so kurz wie möglich sind.

In all diesen angeführten Lösungsmöglichkeiten wird der Ausgleich von Quantität und Qualität des verschmutzten Abwassers direkt im Belebtraum oder im Belebtraum und in den anderen Funktionsbecken oder in den Räumen der Kläranlage ohne ein speziell abgesondertes Ausgleichbecken erreicht. Der Ausgleich der Menge wird jedoch durch das Pumpen erzielt, womit aber erhöhte Kosten und eine erhöhte Störanfälligkeit verbunden sind.

Eine alternative Möglichkeit bei der Reinigung von Abwässern mit hoher Variabilität des Durchflusses und der Qualität ist die Verwendung von so genannten "sequencing batch"- oder "fed-batch"-Reaktoren (SBR Systeme). In der Schrift US 598 94 28 wird ein diskontinuierliches Abwasserreinigungssystem beschrieben, das in einem zyklischen Modus betrieben ist: Füllung, Absetzen und Ablass, mit einem variablen Fassungsvermögen des Reaktionsraums, wobei ein niedriger und hoher Wasserpegel im Reaktor festgesetzt wird und wobei der Zufluss kontinuierlich oder diskontinuierlich sein kann, aber der Ausfluss immer diskontinuierlich sein muss. Dieses Reinigungsverfahren erfordert eine Vorrichtung zur Beseitigung eines gewissen Anteils des abgesetzten Wassers während des Absetzen-Modus, ein so genanntes Dekantieren. Während dieses Modus wird der Zufluss in den Reaktor abgestellt. Im Unterschied zu kontinuierlichen Systemen mit mehreren Reaktoren ist es sehr kompliziert, die Bedingungen für die diametral entgegengesetzten Prozesse innerhalb des gleichen Beckens aufrecht zu erhalten, wie beispielsweise die Nitrifikation und Denitrifikation. Die Durchlaufzeit eines Prozesses (beispielsweise der Nitrifikation) ist wegen der unterschiedlichen Durchflüsse und der Verunreinigung des Zuflusses nur sehr schwer festzustellen Deshalb müssen diese Reaktoren für die schlechtesten Szenarien ausgelegt werden, wodurch die SBR-Reaktoren überdimensioniert sind oder der Einsatz von komplizierten automatischen Systemen nötig ist, die aus Sensoren und Bewertern bestehen, die wiederum die Investitions- und Betriebskosten der Abwasserreinigung erhöhen.

In der Schrift US 450 58 13 ist eine Filtervorrichtung in einer Ausflussleitung beschrieben, die im Nachklärraum eingesetzt ist. Diese Filtervorrichtung verfügt über eine gewisse Filterkapazität; wenn der Abwasserzufluss größer als die Filterkapazität ist, erhöht sich der (Wasser-) Pegel im ganzen Reaktor, wodurch ein größerer Teil des Filters untertaucht und somit die Fläche und damit auch die Filterkapazität sich vergrößern. Der Filter wird wieder mit Druckwasser gespült, das von einer Tauchpumpe geliefert wird, die hinter dem Reaktor in einem Becken mit Klarwasser eingesetzt ist. Ein Nachteil ist jedoch, dass für das Wasser, das für das Spülen der Filtervorrichtung benutzt wird, ein weiteres Becken errichtet werden muss, in dem sich das gereinigte Abwasser sammelt und eine Pumpe mit einem Mehrweg-Steuerventil angebracht wird. Dadurch erhöhen sich aber die Investitions- und Betriebskosten der Abwasserreinigung.

Bei dem Entwurf und bei der Realisierung der kleineren Abwasserreinigungsanlagen ist es notwendig, dass die kleineren Kläranlagen leicht transportable Fertigerzeugnisse oder an Ort und Stelle montierbar sind und sich mit einem Minimum an Bauarbeiten mit den Außenformen den Gegebenheiten der Anwendung oder der Landschaft anpassen, so dass sie anpassungsfähig sind und parallel mit dem Anstieg der produzierten Abwassermenge erweitert werden können. Kleinere Abwasserreinigungsanlagen mit einem integrierten Retentionsraum ermöglichen die Erfüllung all dieser Anforderungen nach dem gegenwärtigen Stand der Technik nicht gleichzeitig.

Die Aufgabe der Erfindung ist es, eine Vorrichtung für die Abwasserreinigung aus kleineren Wasserverschmutzungsquellen zu schaffen, die in einer kompakten Einheit mit der Möglichkeit der Form- und Änderbarkeit durch den Einsatz eines einfachen Betontraggerüsts und leichter Konstruktionswandelemente aus Kunststoff gefertigt werden kann. Dabei soll diese Vorrichtung in einer Funktionseinheit die Aufgabe des Ausgleichs des veränderlichen Durchflusses erfüllen und einen höchstmöglichen Wirkungsgrad der biologischen Reinigung unter Beseitigung von Stickstoff und Phosphor bei niedrigen Ansprüchen an die Pumpen- und Mischtechnik erreichen.

Diese Aufgabe und die Mängel der bekannten Einrichtungen löst bzw. beseitigt im wesentlichen Maße die Vorrichtung zur kontinuierlichen, biologischen Abwasserreinigung mit einem modifizierten Belebungsverfahren, die in einem Becken einen Belebtraum mit unbelüfteten, anaeroben und anoxischen Zonen mit einer belüfteten, oxischen Zone und einen Nachklärraum mit einem Retentionsraum vereinigt, mit einer internen Rückführung zwischen den Zonen des Belebtraums und einer Rezirkulation des Rücklaufschlamms zwischen dem Belebtraum und Nachklärraum gemäß der Erfindung.

Das Wesen der Erfindung besteht darin, dass das Becken, das aus einem Boden und einem Außenmantel besteht, derart in ein unbelüftetes, vertikal durchflossenes Labyrinth, einen belüfteten Belebtraum, einen Nachklärraum und einen Retentionsraum aufgeteilt ist, dass das unbelüftete, vertikal durchflossene Labyrinth vom belüfteten Belebtraum durch eine Trennwand abgetrennt ist, die von dem Boden bis über die Ebene des maximalen Pegels (B) reicht, der durch die Ebene der Hochwasserentlastungsanlage gegeben ist, und die eine Durchlassöffnung entweder auf der Ebene des Beckens oder auf der Ebene der Auslassleitung aus dem Becken aufweist. Der Nachklärraum ist im Inneren des belüfteten Belebtraums durch einen Mantel begrenzt, der vom Boden bis über die Ebene des maximalen Pegels (B) reicht, der durch die Ebene der Hochwasserentlastungsanlage gegeben ist, und weist eine Durchlassöffnung auf der Bodenebene des Beckens auf. Der Retentionsraum befindet sich im Becken zwischen der Ebene des minimalen Pegels (A), die durch die aus dem Becken führende Ausflussleitung gegeben ist, und der Ebene des maximalen Wasserpegels (B), die durch die Ebene der Hochwasserentlastungsanlage gegeben ist, auf der ganzen Fläche des Beckens entlang über dem vertikal durchflossenen Labyrinth, dem belüfteten Belebtraum und dem Nachklärraum. Das vertikal durchflossene Labyrinth ist in Strömungsrichtung durch Trennwände geteilt, die vom Boden bis über die Ebene des maximalen Pegels (B) ragen, die durch die Ebene der Hochwasserentlastungsanlage gegeben ist und die ferner Durchlassöffnungen abwechselnd auf der Bodenebene des Beckens und auf der Ebene des minimalen Pegels (A) aufweisen, die durch die aus dem Becken führende Ausflussleitung gegeben ist, wobei im Nachklärraum auf der aus dem Becken führenden Ausflussleitung ein Durchflussregler mit einer kalibrierten Drosselöffnung angebracht ist.

Für einen wirkungsvollen Ausgleich eines schwankenden Durchflusses der Rohabwässer in die Einrichtung für Abwasserreinigung mit kontinuierlichem Zufluss und Ausfluss ist es wesentlich, dass es durch den Drosseleffekt des Durchflussreglers, der in der Ausflussleitung aus der Einrichtung gemäß der Erfindung angebracht ist, im Falle eines höheren Durchflusses als der dimensionierte auf der Ausflussleitung aus der Einrichtung zu einer Wasserspiegelhebung im ganzen Becken kommt, die von der minimalen Wasserspiegelebene (A), die der Ebene der Ausflussleitung entspricht, bis zur maximalen Wasserspiegelebene (B), die der Ebene der Hochwasserentlastungsanlage entspricht, wobei die inneren Trennwände in dem unbelüfteten, vertikal durchflossenen Labyrinth, die Trennwand zwischen dem belüfteten Belebtraum und dem unbelüfteten, vertikal durchflossenen Labyrinth und der Mantel des Nachklärraums nicht zulassen, dass es zu einer uneingeschränkten, gegenseitigen Vermischung der Inhalte der einzelnen Räume und Zonen kommt, da diese Trennwände und der Mantel bis über die Wasserspiegelebene, die durch die Hochwasserentlastungsanlage gegeben ist, reichen und so alle Abwasserreinigungsverfahren ungestört im Retentionsraum erfolgen können.

Wegen der Anpassung an den sukzessiven Anstieg der Abwasserproduktion ist es vorteilhaft, wenn die Vorrichtung für die kontinuierliche, biologische Abwasserreinigung mit einem modifizierten Belebungsverfahren gemäß der Erfindung arbeiten kann, wobei die Vorrichtung aus einem Becken mit einem viereckigem Grundriss, mit einem Boden und einem Außenmantel bestehen kann und wobei in dem unbelüfteten, vertikal durchflossenen Labyrinth innere Trennwände platziert sind, die von dem Boden des Beckens bis über die Ebene des maximalen Pegels (B), der durch die Ebene der Hochwasserentlastungsanlage gegeben ist, ragen und die mit Durchlassöffnungen versehen sind, die sich abwechselnd auf der Bodenebene des Beckens und auf der Ebene des minimalen Pegels (A), die durch die Ebene der Ausflussleitung in Strömungsrichtung gegeben ist, befinden und die in einer oder mehreren Reihen angeordnet sind, wobei die Reihen durch eine Leitwand voneinander getrennt sind. Gemäß der Erfindung ist es möglich, mehrere Becken parallel in größere Einheiten zusammenzufassen und somit eine fortschreitende Kapazitätssteigerung der Abwasserreinigungsanlagen je nach Produktionssteigerung des rohen Abwassers zu gewährleisten.

Die Vorrichtung zur kontinuierlichen Abwasserreinigung mit einem modifizierten Belebungsverfahren gemäß der Erfindung kann zweckmäßig in einem Becken mit einem kreisförmigen Grundriss mit einem Boden und einem Außenmantel ausgeführt werden.

Das Becken der Vorrichtung gemäß der Erfindung kann auch eine vieleckige Form aufweisen, beispielsweise ein Quadrat oder Sechseck, wobei das Becken durch eine konzentrisch angeordnete Trennwand mit einem kreisförmigen oder vieleckigen Grundriss in einen unbelüfteten Belebtraum und ein belüftetes, vertikal durchflossenes Labyrinth mit einer Durchlassöffnung auf der Ebene des minimalen Pegels (A), die durch die Ebene der Ausflussleitung aus dem Becken gegeben ist, oder auf der Bodenebene des Beckens aufgeteilt ist. In dem unbelüfteten, vertikal durchflossenen Labyrinth befinden sich radial angeordnete innere Trennwände, die vom Boden bis über die Ebene des maximalen Pegels (B), der durch die Ebene der Hochwasserentlastungsanlage des Bodens gegeben ist, ragen und die Durchlassöffnungen aufweisen, die sich abwechselnd auf der Bodenebene des Beckens und auf der Ebene des minimalen Pegels (A), die durch die Ebene der Ausflussleitung in Strömungsrichtung gegeben ist, befinden.

Die Vorrichtung gemäß der Erfindung wird vorteilhaft bei monolithischen oder vorgefertigten Betonbecken aus wasserbaufähigem Beton gefertigt, wobei das Becken einen kreisförmigen, quadratischen oder vieleckigen Grundriss aufweist, der Boden, der Außenmantel, die Trennwand zwischen dem unbelüfteten, vertikal durchflossenen Labyrinth und dem belüfteten Belebtraum und die Leitwand zwischen den Reihen von Trennwänden aus wasserbaufähigem Beton hergestellt sind und der Mantel des Nachklärraums aus Konstruktionswandelementen aus Kunststoff, wie beispielsweise aus Polyethylen (PE), Polypropylen (PP) oder Hartpolyvinylchlorid (hPVC), hergestellt ist. Gemäß der Erfindung ist es möglich, mehrere Becken parallel in größere Einheiten zusammenzufassen und somit eine fortschreitende Kapazitätssteigerung der Abwasserreinigungsanlagen je nach Produktionssteigerung des Rohabwassers zu gewährleisten.

Die Vorrichtung gemäß der Erfindung wird vorteilhaft bei Becken mit einem kreisförmigen, quadratischen oder vieleckigen Grundriss eingesetzt, wobei der Boden, der Außenmantel, die Trennwand zwischen dem unbelüfteten, vertikal durchflossenen Labyrinth und dem belüfteten Belebtraum und die Leitwand zwischen den Reihen von Trennwänden aus Konstruktionswandelementen aus Kunststoff, wie beispielsweise aus Polyethylen (PE), Polypropylen (PP) oder Hartpolyvinylchlorid (hPVC) hergestellt werden. Gemäß der Erfindung ist es möglich, mehrere Becken parallel in größere Einheiten zusammenzufassen und somit eine fortschreitende Kapazitätssteigerung der Abwasserreinigungsanlagen je nach Produktionssteigerung des Rohabwassers zu gewährleisten.

Für den Einfachbetrieb des Durchflussreglers ist es nicht von Bedeutung, diesen zu warten, da die Drosselbohrung und die Durchlassöffnungen durch einen Schutzfilter, der zyklisch mit dem gereinigten Abwasser abgespült wird, vor Verschlämmung geschützt sind. Der Spülmechanismus beruht auf dem System, dass durch die Öffnung in einem Hohlkörper des Durchflussreglers unter einer Ausflussabschirmung Druckluft bzw. Druckwasser das Klärwasser, das sich im Strömungsregler im Raum zwischen dem Mantel des Durchflussreglers und der Überströmleitung im Inneren des Durchflussreglers befindet, durch den Schutzfilter hochpumpt. Erst dann, wenn das hochgepumpte Klärwasser die Höhe der Einflussöffnung der Überströmleitung erreicht hat, beginnt das Druckwasser bzw. die Druckluft durch die Drosselbohrung auszuströmen. Ein auf diese Weise hergestellter kurzzeitiger Rückstoß des Druckwassers oder eines Gemisches aus Druckluft und Druckwasser ist für eine vollkommene Reinigung des Schutzfilters ausreichend, und eine manuelle Reinigung ist daher nicht mehr nötig.

Bei der technischen Lösung der Mängel bei kleineren Abwasserreinigungsanlagen nach dem bisherigem Stand der Technik wurde gemäß der Erfindung eine Vorrichtung zur Abwasserreinigung aus kleineren Wasserverschmutzungsquellen entworfen, die in einer kompakten Einheit mit der Möglichkeit der Form- und Änderbarkeit durch den Einsatz eines einfachen Betontraggerüsts und leichter Konstruktionswandelemente aus Kunststoff gefertigt werden kann. Dabei soll die Vorrichtung in einer Funktionseinheit die Aufgabe des Ausgleichs des veränderlichen Durchflusses erfüllen und einen höchstmöglichen Wirkungsgrad der biologischen Reinigung unter Beseitigung von Stickstoff und Phosphor und unter niedrigen Ansprüchen an die Pumpen- und Mischtechnik erreichen.

Die Erfindung wird nun anhand von Ausführungsbeispielen näher erläutert.

Es zeigen:
- Figuren 1a, 1b: eine Vorrichtung für die Abwasserreinigung gemäß der Erfindung,
- Figuren 2a, 2b, 2c: eine Vorrichtung für die Abwasserreinigung mit einem viereckigen Grundriss,
- Figuren 3a, 3b, 3c: eine Vorrichtung für die Abwasserreinigung mit einem kreisförmigen, quadratisches oder vieleckigen Grundriss und
- Fig. 4: einen Durchflussregler.

### Beispiel 1

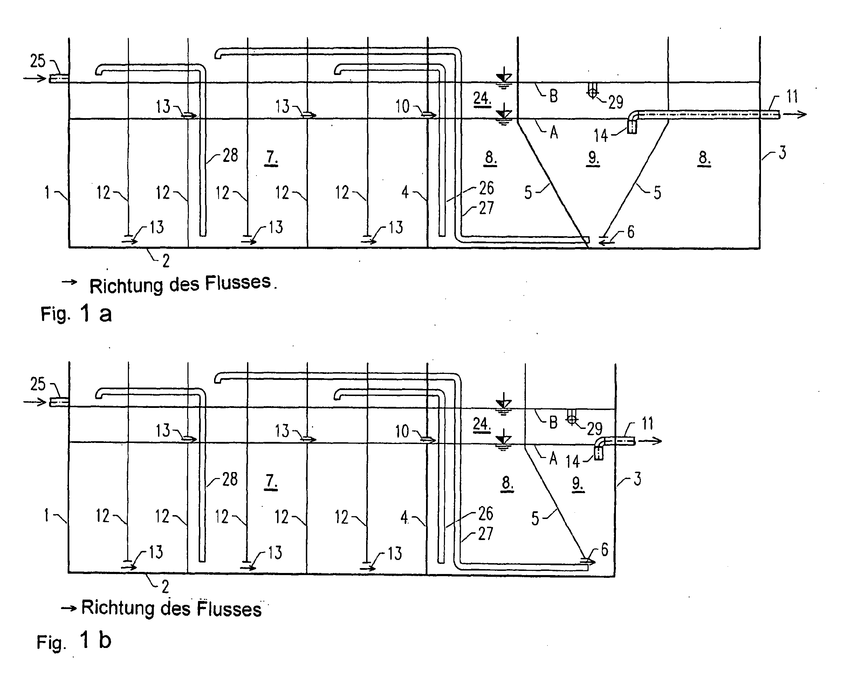

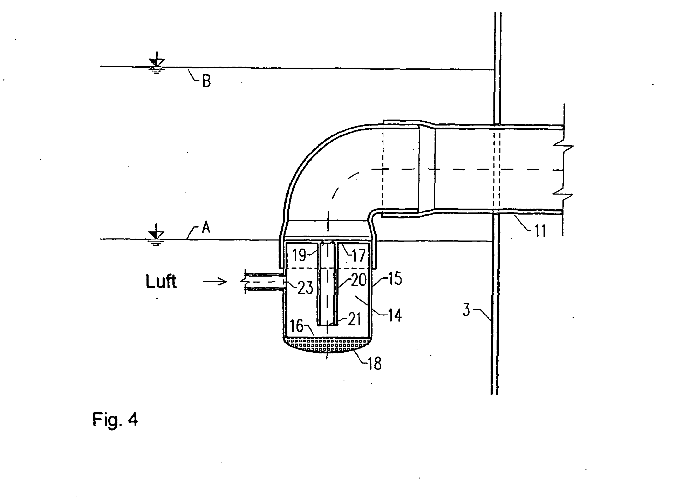

Eine Vorrichtung zur kontinuierlichen Abwasserreinigung mittels eines modifizierten Belebungsverfahrens gemäß der Erfindung besteht nach den Figuren 1a und 1b aus einem Becken 1 mit einem Boden 2 und einem Außenmantel 3. Das Becken 1 ist durch eine Trennwand 4 in ein unbelüftetes, vertikal durchflossenes Labyrinth 7 und einen belüfteten Belebtraum 8 aufgeteilt. Der Nachklärraum 9 ist im Inneren des belüfteten Belebtraums 8 durch einen Mantel 5 des Nachklärraums ausgegliedert. In Übereinstimmung mit den traditionellen Aufbauprinzipien der Nachklärräume für den Belebtschlamm hat der Mantel 5 des Nachklärraums 9 die Form eines komplett gewendeten und abgestumpften Kegels oder eines Balkens (Fig. 1 a) oder die Form eines teilweise gewendeten und abgestumpften Kegels oder Balkens (Fig. 1 b), wobei der Mantel 5 des Nachklärraums 9 mit dem Boden 2 des Beckens 1 ein Mindestgefälle von 60° schließt. Die Trennwand 4 und der Mantel 5 des Nachklärraums 9 reichen von dem Boden 2 bis über die Ebene des maximalen Pegels B, der durch die Ebene der Hochwasserentlastungsanlage 29 des Bodens 1 gegeben ist. In der Trennwand 4 befindet sich auf der Ebene des minimalen Pegels A, die durch die Ebene der Ausflussleitung 11 gegeben ist, oder auf der Bodenebene 2 des Beckens 1 eine Durchlassöffnung 10. Im Mantel 5 des Nachklärraums 9 befindet sich auf der Bodenebene 2 des Beckens 1 eine Durchlassöffnung 6. Das unbelüftete, vertikal durchflossene Labyrinth 7 ist aus einer Reihe von inneren Trennwänden 12 gebildet, die von dem Boden 2 bis über die Ebene des maximalen Pegels B reichen, der durch die Ebene der Hochwasserentlastungsanlage 29 des Bodens 1 gegeben ist. Die einzelnen aufeinander folgenden Trennwände 12 haben Durchlassöffnungen 13 abwechselnd auf der Bodenebene 2 des Beckens 1 und der Ebene des minimalen Pegels A, die durch die Ebene der Ausflussleitung 11 aus dem Becken 1 gegeben ist. Im Nachklärraum 9 ist unter dem Klarwasserspiegel ein Durchflussregler 14 angeordnet, wie in Fig. 4 dargestellt ist. Der Durchflussregler 14 ist ein Hohlkörper, der aus einer Mantelfläche 15, einer Einflussöffnung 16 und einer Ausflussabschirmung 17 besteht, wobei die Einflussöffnung 16 mit einem Schutzfilter 18 geschützt ist. In der Stauscheibe 17 befindet sich eine Drosselbohrung 19, deren festgelegte Durchlässigkeit des Abwasseranfalls dem festgelegten Höchstdurchfluss in der Ausflussleitung aus der Einrichtung für die Abwasserreinigung gleich ist. Im Inneren des Durchflussreglers 14 befindet sich eine Überströmleitung 20, deren Einflussöffnung 21 dicht hinter der Einflussöffnung 16 des Durchflussreglers 14 liegt. Die Ausflussöffnung 22 ist mit der Drosselbohrung 19 verbunden. Im Raum zwischen der Überströmleitung 20 und der Mantelfläche 15 des Durchflussreglers 14 befindet sich das Klärwasser, das für das Abspülen des Schutzfilters benutzt wird. Unter der Ausflussabschirmung 17 in der Mantelfläche 15 des Durchflussreglers 14 ist eine Öffnung 23 für den Einlass des fluiden Druckmediums, beispielsweise Druckluft oder Druckwasser. Im Nachklärraum 9 ist eine Hochwasserentlastungsanlage 29 eingesetzt, die zur Abwasserbeseitigung für einen größeren Durchfluss als den festgelegten Höchstdurchfluss Qₘₐₓ dient. Aus der Hochwasserentlastungsanlage 29 fließt das Klärwasser in den Ausfluss, in die Nebenstromführung oder in ein anderes Becken ab, welche jedoch nicht in den Zeichnungen dargestellt sind. Der Retentionsraum 24 ist im Becken 1 zwischen der Ebene des minimalen Pegels A, die durch die Ebene der Ausflussleitung 11 aus dem Becken 1 gegeben ist, und der Ebene des maximalen Pegels B, der durch die Ebene der Hochwasserentlastungsanlage 29 des Bodens 1 gegeben ist, in der ganzen Fläche des Beckens 1 abgegrenzt, demnach also über dem unbelüfteten, vertikal durchflossenen Labyrinth 7, dem belüfteten Belebtraum 8 und dem Nachklärraum 9, wobei die Trennwand 4 zusammen mit den inneren Trennwänden 12 und dem Mantel 5 des Nachklärraums 9 in dem Retentionsraum 24 anaerobe, anoxische und oxische Bedingungen sowie auch Abtrennbedingungen für den Belebtschlamm begrenzen. Die Belüftung des Inhalts in dem belüfteten Belebtraum 8 ist nach dem bisherigen Stand der Technik ausreichend bekannt. Die Quelle der Druckluft, die in den Zeichnungen nicht dargestellt ist, ist auch die Quelle der Druckluft für die Mammutpumpen 26, 27, 28, die den Rücklauf des Belebtschlamms aus dem Nachklärraum 9 in das unbelüftete, vertikal durchflossene Labyrinth 7 sowie auch die Rezirkulation aus dem belüfteten Belebtraum 8 in das unbelüftete, vertikal durchflossene Labyrinth 7 und die innere Rezirkulation innerhalb des unbelüfteten, vertikal durchflossenen Labyrinth 7 ausführen.

Der Zufluss des Rohabwassers mündet durch die Zuflussleitung 25 in das unbelüftete, vertikal durchflossene Labyrinth 7. Das Belebtschlammgemisch, das durch das Mischen des Rohabwassers mit dem rezirkulierten Belebtschlamm entsteht, fließt durch eine Reihe von inneren Trennwänden 12 und deren wechselnde Durchlassöffnung 13 auf der Bodenebene 2 des Beckens 1 und in der Ebene des minimalen Pegels A, die durch die Ebene der Ausflussleitung 11 gegeben ist, hindurch. Die abwechselnde Anordnung der Durchlassöffnungen 13 in unterschiedlichen Höhen in den Trennwänden 12 in Strömungsrichtung stellt die Bedingungen für eine ideale und sparsame Vermischung des Inhalts in dem unbelüfteten, vertikal durchflossenen Labyrinth 7 her, ohne die Verwendung eines mechanischen Mischwerks, in dem anaerobe und anoxische Bedingungen für den Belebtschlamm hergestellt werden. Aus dem unbelüfteten, vertikal durchflossenen Labyrinth 7 fließt das Belebtschlammgemisch durch eine Durchlassöffnung 10 in der Trennwand 4 in den belüfteten Belebtraum 8 ab. Im belüfteten Belebtraum 8 werden mittels der Belüftung oxische Bedingungen für den Belebtschlamm aufrechterhalten. Aus dem belüfteten Belebtraum 8 fließt das Belebtschlammgemisch in den Nachklärraum 9 durch eine Durchlassöffnung 6 im Mantel 5 des Nachklärraums 9 ab. Im Nachklärraum 9 kommt es durch die Wirkung der Schwerkraft zur Ablagerung des Belebtschlamms, wobei der Belebtschlamm aus dem Nachklärraum 9 in Form vom Rücklaufschlamm mit einer Mammutpumpe 27 in das unbelüftete, vertikal durchflossene Labyrinth 7 abgesaugt wird und das Klärwasser durch den Durchflussregler 14 und die Auslassleitung 11 aus dem Becken 1 der Wasserreinigungsanlage abfließt. Das Klärwasser fließt in den Strömungsregler 14 durch ein Schutzfilter 18 an der Einflussöffnung 16 des Durchflussreglers 14 hinein. Im Inneren des Durchflussreglers 14 befindet sich nach dem Schutzfilter 18 eine Einflussöffnung 21 der Überströmleitung 20, welche an ihrem anderen Ende in eine Drosselbohrung 19 der Ausflussabschirmung 17 mündet. Hinter der Ausflussabschirmung 17 fließt das geklärte Abwasser frei durch die Auslassleitung 11 aus dem Becken 1 ab. Die Funktion des Durchflussreglers 14 besteht darin, dass durch die kalibrierte Drosselbohrung 19 das Klärwasser nur in solcher Durchflussmenge abfließen kann, die kleiner oder gleich dem festgelegten Höchstdurchfluss auf der Ausflussleitung aus der Einrichtung ist, auf den die Fläche und das Fassungsvermögen des Nachklärraums 9 festgelegt sind. Im Falle eines höheren Durchflusses kommt es im ganzen Becken 1 zu einer Wasserspiegelhebung, aus der Wasserspiegelebene A bis zur Wasserspiegelebene B durch den Drosseleffekt des Durchflussreglers 14. Die inneren Trennwände 12, die Trennwand 4 und der Mantel 5 des Nachklärraums 9 lassen nicht zu, dass es zu einer uneingeschränkten gegenseitigen Vermischung der Inhalte der einzelnen Räume kommt, und deshalb können alle Abwasserreinigungsverfahren ungestört im Retentionsraum 24 erfolgen.

Die Drosselbohrung 19 und die Durchlassöffnungen 20 sind durch einen Schutzfilter 18, der zyklisch mit dem gereinigten Abwasser abgespült wird, vor Verschlämmung geschützt. Der Spülmechanismus beruht auf dem System, dass durch die Öffnung 23 in dem Hohlkörper des Durchflussreglers 14 unter der Ausflussabschirmung 17 Druckluft bzw. Druckwasser eingetrieben wird. Die Druckluft oder das Druckwasser pumpt das Klärwasser, das sich im Durchflussregler 14 befindet, durch das Schutzfilter 18 hoch, und erst wenn das hochgepumpte Klärwasser die Ebene der Einflussöffnung 21 der Durchlassöffnungen 20 erreicht, beginnt es durch die Drosselbohrung 19 auszuströmen. Ein auf solche Weise hergestellter kurzzeitiger Rückstoß des Druckwassers oder eines Gemisches aus Druckluft und Druckwasser ist für eine vollkommene Reinigung des Schutzfilters 18 ausreichend, und eine manuelle Reinigung ist daher nicht mehr nötig.

Praktischerweise wird das Material des Außenmantels 3, des Beckenbodens 2, der Trennwand 4 und der inneren Trennwände 12 des Beckens 1 und des Mantels 5 des Nachklärraums 9 aus Konstruktionswandelementen aus Kunststoff hergestellt, beispielsweise aus Polyäthylen (PE), Polypropylen (PP) oder Hartpolyvinylchlorid (hPVC).

Zur Transporterleichterung kann das Becken 1 auch die Standardaußenmaße eines Containers haben. Am Standort können die Becken 1 in größere Einheiten auf einmal oder sukzessiv zusammengefasst werden, je nach Anstieg der produzierten Abwassermenge.

Das Material der Tragwände, des Außenmantels 3, des Beckenbodens 2 und der Trennwand 4 können aus wasserbaufähigem Beton hergestellt werden, die inneren Trennwände 12 zusammen mit dem Mantel 5 des Nachklärraums 9 aus Konstruktionswandelementen aus Kunststoff, wie beispielsweise aus Polyäthylen (PE), Polypropylen ((PP) oder Hartpolyvinylchlorid (hPVC).

### Beispiel 2

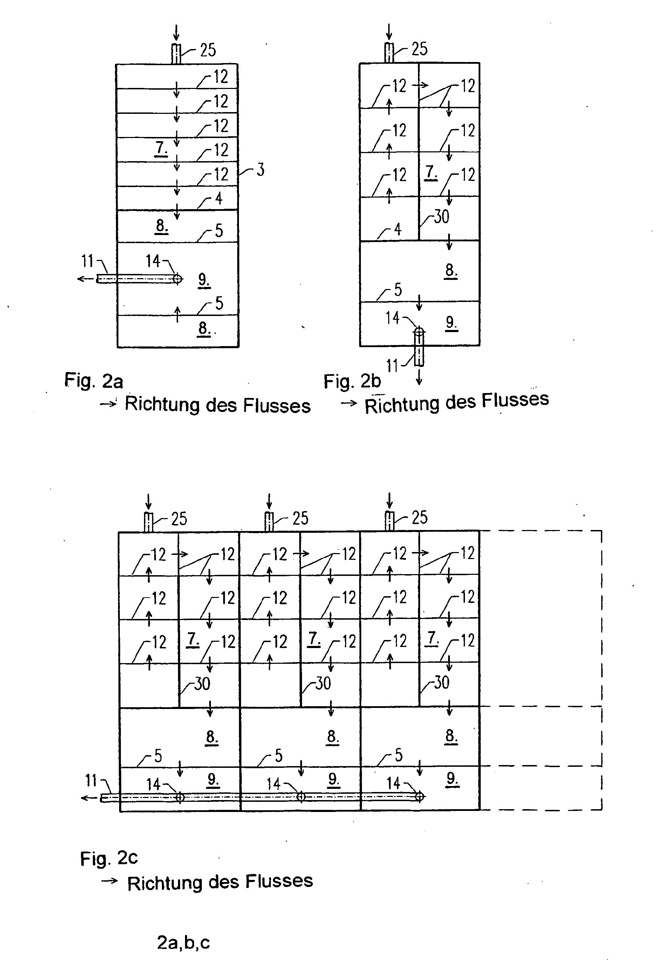

Eine Vorrichtung für eine kontinuierliche Abwasserreinigung mittels modifiziertem Belebungsverfahren gemäß der Erfindung besteht nach den Figuren 2a, 2b und 2c aus einem Becken 1 mit einem viereckigem Grundriss, einem Boden 2 und einem Außenmantel 3. Das Becken 1 ist durch eine Trennwand 4 in ein unbelüftetes, vertikal durchflossenes Labyrinth 7 und einen belüfteten Belebtraum 8 mit einer Durchlassöffnung 10 in der Ebene des minimalen Pegels A, die durch die Ebene der Ausflussleitung 11 aus dem Becken 1 gegeben ist, oder in der Bodenebene 2 des Beckens 1 geteilt Das unbelüftete, vertikal durchflossene Labyrinth 7 ist aus einer Reihe von inneren Trennwänden 12 gebildet, die vom Boden 2 des Beckens 1 bis über die Ebene des maximalen Pegels B reichen, die durch die Ebene der Hochwasserentlastungsanlage 29 gegeben ist, und die Durchlassöffnungen 12 aufweisen, die sich abwechselnd in der Bodenebene 2 des Beckens 1 und in der Ebene des minimalen Pegels A, die durch die Ebene der Ausflussleitung 11 in Strömungsrichtung gegeben ist, befinden und in einer Reihe (Fig. 2a) oder mehreren Reihen (Fig. 2b) angeordnet sind. Im Fall, dass die inneren Trennwände 12 in mehreren Reihen angeordnet sind, sind sie voneinander durch eine Leitwand 30 geteilt, wobei die Strömungsrichtung auf der linken und der rechten Seite der Leitwand 30 entgegengesetzt ist, damit dem Prinzip gefolgt werden kann, dass das Abwasser schrittweise durch alle inneren Trennwände 12 läuft und schließlich durch die Durchlassöffnung 13 in den belüfteten Belebtraum 8 abfließt. Gemäß der Erfindung ist es möglich, mehrere Becken 1 parallel in größeren Einheiten zusammenzufassen (Fig. 2c) und somit eine fortschreitende Kapazitätssteigerung der Abwasserreinigungsanlagen je nach Produktionssteigerung des Rohabwassers zu gewährleisten.

### Beispiel 3

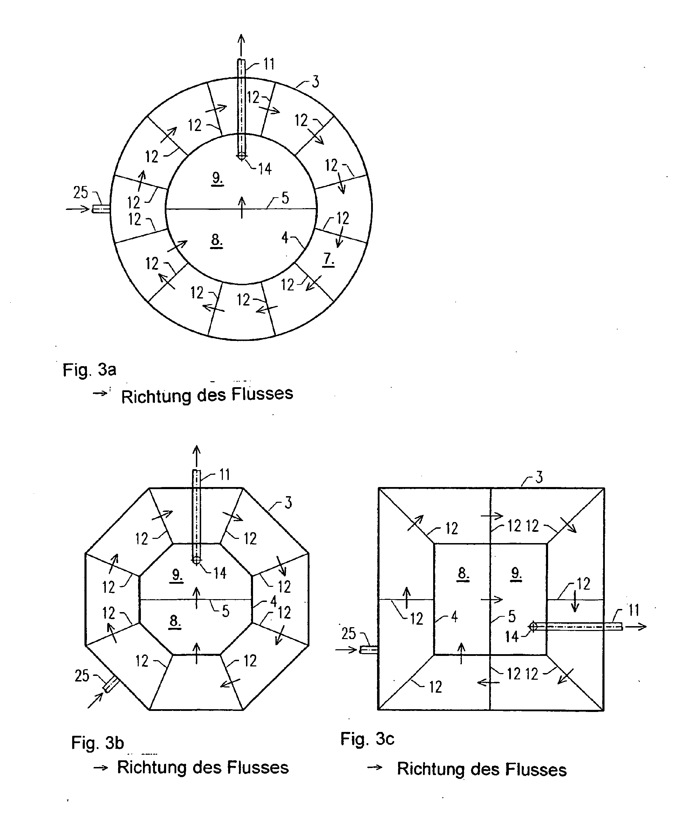

Eine Vorrichtung für eine kontinuierliche Abwasserreinigung mittels eines modifizierten Belebungsverfahren gemäß der Erfindung besteht nach den Figuren 3a, 3b und 3c aus einem Becken 1 mit einem kreisförmigen Grundriss mit einem Boden 2 und einem Außenmantel 3. Das Becken 1 kann auch die Form eines Vielecks haben, beispielsweise eines Quadrats oder Sechsecks. Das Becken 1 mit einem kreisförmigen oder regelmäßig vieleckigen Grundriss ist durch eine konzentrisch angeordnete Trennwand 4 in ein unbelüftetes, vertikal durchflossenes Labyrinth 7 und einen belüfteten Belebtraum 8 mit einer Durchlassöffnung 10 in der Ebene des minimalen Pegels A, die durch die Ebene der Ausflussleitung 11 aus dem Becken 1 gegeben ist, oder in der Bodenebene 2 des Beckens 1 geteilt. Das unbelüftete, vertikal durchflossene Labyrinth 7 ist aus radial angeordneten inneren Trennwänden 12 gebildet, die vom Boden 2 bis über die Ebene des maximalen Pegels B reichen, die durch die Ebene der Hochwasserentlastungsanlage 29 gegeben ist, und die mit Durchlassöffnungen 13, die sich abwechselnd in der Bodenebene 2 des Beckens 1 und in der Ebene des minimalen Pegels A, die durch die Ebene der Ausflussleitung 11 in Strömungsrichtung gegeben ist, befinden.

Eine Vorrichtung gemäß der Erfindung kann bei der Abwasserreinigung aus unterschiedlichen, vor allem aber aus kleineren Quellen verwendet werden, sowohl bei kommunalen wie auch bei industriellen Quellen mit einer biologisch abbaubaren Belastung. Aufgrund ihrer Flexibilität ist diese Vorrichtung besonders für dezentrale Lösungen der Abwasserreinigung für kleinere Gemeinden, Schulen, Restaurants, Hotels, Pensionen, auf grüner Wiese gebaute Industrieanlagen u. ä. geeignet. Die Vorrichtung ist anpassungsfähig und kann schrittweise zu größeren Einheiten je nach dem Produktionsanstieg der Abwässer verbunden werden. Der Vorteil dieser Vorrichtung sind niedrige Baukosten, da es die technische Lösung ermöglicht, schon fertige, "eingepackte" oder "Container"-Abwasserkläranlagen zu liefern, die nur geringe Montage- und Bauarbeiten auf dem Anlagenort erfordern, wobei die Qualität des Klärwassers auch die erhöhten Anforderungen aus der Sicht der Abwasserqualität erfüllt. Deshalb ist es möglich, diese Kläranlagen auch für den Auslass der Klärwässer in die Oberflächengewässer in empfindlichen Gebieten, in denen die Oberflächengewässer dem Einfluss einer übermäßigen Düngung zu unterliegen drohen, oder für den Auslass in das Grundwasser oder auch bei der Wiederverwendung der Klärwässer zu verwenden.

## Patentansprüche

1. Vorrichtung zur Abwasserreinigung mittels eines modifizierten Belebungsverfahrens mit kontinuierlichem Zufluss und Ausfluss, wobei diese Vorrichtung in einem Becken einen Belebtraum mit aufgeteilten anaeroben und anoxischen Zonen mit vertikalem Durchfluss, die mit einer belüfteten oxischen Zone vereinigt sind, einen Nachklärraum und einen Retentionsraum mit einer inneren Rückführung zwischen den Zonen des Belebtraums und mit einer Rezirkulation des Rücklaufschlamms zwischen dem Belebtraum und dem Nachklärraum aufweist, **dadurch gekennzeichnet,**
**dass** das Becken (1) mit einem Boden (2) und einem Außenmantel (3) in ein unbelüftetes, vertikal durchflossenes Labyrinth (7), einen belüfteten Belebtraum (8), einen Nachklärraum (9) und einen Retentionsraum (24) aufgeteilt ist, dass das Labyrinth (7) vom belüfteten Belebtraum (8) durch eine Trennwand (4) getrennt ist, die vom Boden (2) bis über die Ebene des maximalen Pegels (B) reicht, die durch die Ebene der Hochwasserentlastungsanlage (29) gegeben ist, und die mit einer Durchlassöffnung (10) in der Bodenebene (2) des Beckens (1) oder in der Ebene des minimalen Pegels (A), die durch die Ebene der Ausflussleitung (11) aus dem Becken (1) gegeben ist, versehen ist, und dass der Nachklärraum (9) im Inneren des belüfteten Belebtraums (8) durch einen Mantel (5), der vom Boden (2) bis über die Ebene des maximalen Pegels (B) reicht, die durch die Ebene der Hochwasserentlastungsanlage (29) gegeben ist, begrenzt ist, dass eine Durchlassöffnung (6) auf der Bodenebene (2) des Beckens (1) vorgesehen ist, dass der Retentionsraum (24) im Becken (1) zwischen der Ebene des minimalen Pegels (A), die durch die aus dem Becken (1) führende Ausflussleitung (11) gegeben ist, und der Ebene des maximalen Pegels (B), die durch die Ebene der Hochwasserentlastungsanlage (29) gegeben ist, über die ganze Fläche des Beckens (1) entlang über dem unbelüfteten, vertikal durchflossenen Labyrinth (7), dem belüfteten Belebtraum (8) und dem Nachklärraum (9) begrenzt ist, wobei ein Durchflussregler (14) mit einer kalibrierten Drosselöffnung (19) im Nachklärraum (9) auf der aus dem Becken (1) führenden Ausflussleitung (11) aufgebaut ist.

2. Vorrichtung nach Anspruch 1,
**dadurch gekennzeichnet,**
**dass** das unbelüftete, vertikal durchflossene Labyrinth (7) durch eine Reihe von Trennwänden (12) in Strömungsrichtung gebildet ist, die vom Boden (2) bis über die Ebene des maximalen Pegels (B) reichen, die durch die Ebene der Hochwasserentlastungsanlage (29) gegeben ist, und die ferner Durchlassöffnungen (13) abwechselnd auf der Bodenebene (2) des Beckens (1) und der Ebene des minimalen Pegels (A) aufweisen, die durch die aus dem Becken (1) führende Ausflussleitung (11) gegeben ist.

3. Vorrichtung nach den Ansprüchen 1 und 2,
**dadurch gekennzeichnet,**
**dass** das Becken (1) einen Außenmantel (3) in der Form eines kreisförmigen oder vieleckigen Grundrisses mit mindestens vier Winkeln aufweist und dass die Trennwand (4) zwischen dem unbelüfteten, vertikal durchflossenen Labyrinth (7) und dem belüfteten Belebtraum (8) konzentrisch angeordnet und mit einem kreisförmigen oder vieleckigen Grundriss mit mindestens vier Winkeln versehen ist, wobei das Labyrinth (7) durch eine Reihe von mindestens sechs radial angeordneten inneren Trennwänden (12) in Strömungsrichtung gebildet wird.

4. Vorrichtung nach den Ansprüchen 1 bis 3,
**dadurch gekennzeichnet,**
**dass** das Becken (1) einen Außenmantel (3) im rechteckigen Grundriss aufweist und das Labyrinth (7) aus mindestens zwei Parallelreihen innerer Trennwände (12), die durch eine Leitwand (30) voneinander getrennt sind, und mit einer Reihe von Trennwänden (12) in Strömungsrichtung gebildet ist, die vom Boden (2) bis über die Ebene des maximalen Pegels (B) reichen, die durch die Ebene der Hochwasserentlastungsanlage (29) gegeben ist, und die ferner Durchlassöffnungen (12) abwechselnd auf der Bodenebene (2) des Beckens (1) und der Ebene des minimalen Pegels (A), die durch die aus dem Becken (1) führenden Ausflussleitung (11) gegeben ist, und dass eine Leitwand (30), die vom Boden (2) bis über die Ebene des maximalen Pegels (B) ragt, die durch die Ebene der Hochwasserentlastungsanlage (29) gegeben ist, vorgesehen ist.

5. Vorrichtung nach den Ansprüchen 1 bis 4,
**dadurch gekennzeichnet,**
**dass** das Material des Bodens (2), des Außenmantels (3) und der Trennwand (4) zwischen dem Labyrinth (7) und dem belüfteten Belebtraum (8) und der Leitwand (30) ein wasserbaufähiger Beton und/oder ein Konstruktionswandelement aus Kunststoff ist und dass das Material, das in den inneren Trennwänden (12) und im Mantel (5) verwendet wird, ein Konstruktionswandelement aus Kunststoff ist.

6. Vorrichtung nach den Ansprüchen 1 bis 5,
**dadurch gekennzeichnet,**
**dass** der Filter (18) für grobe Schmutzteile auf dem Eintrittsstutzen (16) im Durchflussregler (14) wieder mit dem Klärwasser gespült wird, das im Innern des Durchflussreglers (14) zwischen dem Mantel (15) und der Überströmleitung (20) durch das periodische Einblasen des fluiden Druckmediums in das Innere des Durchflussregler (14) gesammelt wurde.

7. Vorrichtung nach Anspruch 6,
**dadurch gekennzeichnet,**
**dass** das fluide Druckmedium Druckluft oder Druckwasser ist.

## Claims

1. Waste water purifying device by a modified activated sludge process with continuous inflow and outflow, combining in one tank the activated-sludge chamber with compartmentalized anaerobic and anoxic zones with vertical through-flow and an aerated oxic zone, secondary sedimentation chamber and retention chamber, with internal recirculation between the zones of the activated-sludge chambers and recirculation of return sludge between the activated-sludge chamber and secondary sedimentation chamber, **characterized in that**
the tank (1) with a bottom (2) and sidewall (3) is partitioned into a non-aerated vertically through-flown labyrinth (7), an aerated activated-sludge chamber (8), secondary sedimentation chamber (9) and retention chamber (24), wherein the non-aerated vertically through-flown labyrinth (7) is separated from the aerated activated-sludge chamber (8) by a partition wall (4) extending from bottom (2) up to a height over the maximum level B given by the level of a safety overflow (29), and having a passage opening (10) at the level of the bottom (2) of the tank (1) or at the height of minimum level A given by the level of outlet conduit (11) from the tank (1), the secondary sedimentation chamber (9) is formed inside the aerated activated sludge chamber (8) by shell (5) extending from the bottom (2) up to a height over the maximum level B given by the level of safety overflow (29), and having a passage opening (6) at the level of bottom (2) of the tank (1), and the retention chamber (24) is formed in the tank (1) between the height of the minimum level A given by the level of outlet conduit (11) from the tank (1), and the height of the maximum level B given by the level of safety overflow (29) throughout the whole surface area of the tank (1) over the non-aerated vertically through-flown labyrinth (7), the aerated activated-sludge chamber (8) and the secondary sedimentation chamber (9), whereby a flow regulator (14), having a calibrated throttling opening (19) is arranged in the secondary sedimentation chamber (9) on the outlet conduit (11) from the tank (1).

2. Device according to claim 1,
**characterized in that**
the non-aerated vertically through-flown labyrinth (7) is formed by a series of inner partition walls (12) in the direction of advancing flow, extending from bottom (2) up to a height over the maximum level B given by the level of safety overflow (29), and having passage openings (13) alternately at the level of the bottom (2) of the tank (1) and at the height of the minimum level A given by the level of outlet conduit (11) from the tank (1).

3. Device according to claims 1 and 2,
**characterized in that**
the tank (1) has sidewall (3) of a circular ground plan or polygonal ground plan with at least four edges, and the partition wall (4) between the non-aerated vertically through-flown labyrinth (7) and the aerated activated-sludge chamber (8) is concentrically arranged with a circular ground plan or polygonal ground plan with at least four edges, wherein the non-aerated vertically through-flown labyrinth (7) is formed by a series of at least six radially arranged inner partition walls (12) in the direction of advancing flow.

4. Device according to claims 1 to 3,
**characterized in that**
the tank (1) has sidewall (3) of a rectangular ground plan, and the non-aerated vertically through-flown labyrinth (7) is formed by at least two parallel rows of inner partition walls (12), separated by a guiding wall (30), with a series of inner partition walls (12) extending from the bottom (2) of the tank up to a height over the maximum level B given by the level of safety overflow (29), and having passage openings (13) alternately at the level of the bottom (2) of the tank (1) and at the level of the minimum level A given by the level of the outlet conduit (11) in the direction of advancing flow, with guiding wall (30) extending from the bottom (2) of the the tank up to a height over the maximum level B given by the level of the safety overflow (29).

5. Device according to claims 1 to 4,
**characterized in that**
the material of the bottom (2), sidewall (3) and partition wall (4) between the non-aerated vertically through-flown labyrinth (7) and the aerated activated sludge chamber (8) and of the guiding wall (30) is watertight concrete and/or plastic constructional wall element, and the material of inner partition walls (12) and shell (5) is plastic constructional wall element.

6. Device according to claims 1 to 5,
**characterized in that**
the screen (18) for coarse impurities at the inlet opening ( (16) of the flow regulator (14) is backwashed by treated water accumulated inside of the flow regulator (14) between the shell (15) of the flow regulator (14) and passage conduit (20) by periodical blowing of pressurized fluid medium into the flow regulator (14).

7. Device according to claim 6,
**characterized in that**
the pressurized fluid medium is compressed air or pressurized water.

## Revendications

1. Dispositif de purification des eaux usées par un procédé de boues activées avec flux d'entrée et flux de sortie continus, comprenant au sein d'une cuve un bassin de boues activées avec des zones compartimentées anaérobiques et anoxiques à débit traversier vertical et à zone oxique aérée, un bassin de sédimentation secondaire et un bassin de rétention, avec recirculation interne entre les zones du bassin de boues activées et recirculation du retour des boues entre le bassin de boues activées et le bassin de sédimentation secondaire, **caractérisé en ce que**
la cuve (1) comprenant un bas (2) et une paroi latérale (3) et divisée entre un labyrinthe de débit traversier vertical non aéré (7), un bassin aéré de boues activées (8), un bassin de sédimentation secondaire (9) et un bassin de rétention (24), dans lequel le labyrinthe de débit traversier vertical non aéré (7) est séparé du bassin aéré de boues activées (8) par une cloison (4) du bas (2) jusqu'à une hauteur supérieure au niveau maximal B donné par le niveau d'un trop-plein de sécurité (29), et qui dispose d'un orifice de passage (10) au niveau du bas (2) de la cuve (1) ou à la hauteur du niveau A minimal donné par la conduite de sortie (11) de la cuve (1), le bassin de sédimentation secondaire (9) est conçu à l'intérieur du bassin aéré de boues activées (8) par une coque (5) au bas (2) jusqu'à une hauteur supérieure au niveau maximal B donné par le niveau d'un trop-plein de sécurité (29), et qui dispose d'une orifice de passage (6) au niveau du bas (2) de la cuve (1) situé entre la hauteur du niveau A minimal donné par la conduite de sortie (11) de la cuve (1) et la hauteur du niveau maximal B donné par le niveau d'un trop-plein de sécurité (29), à travers toute la surface de la cuve (1) sur le labyrinthe de débit traversier vertical non aéré (7), le bassin aéré de boues activées (8) et le bassin de sédimentation secondaire (9), où un régulateur de débit (14), doté d'un orifice d'étranglement calibré (19), est disposé dans le bassin de sédimentation secondaire (9) sur la conduite de sortie (11) de la cuve (1).

2. Dispositif selon la revendication 1,
**caractérisé en ce que**
le labyrinthe de débit traversier vertical non aéré (7) comprend une série de cloisons intérieures (12) dans la direction du flux actif, du bas (2) jusqu'à la hauteur du niveau maximal B donné par le niveau d'un trop-plein de sécurité (29), et disposant d'un orifice de passage (13) soit situé au niveau du bas (2) de la cuve (1) soit à la hauteur du niveau A minimal donné par la conduite de sortie (11) de la cuve (1).

3. Dispositif selon les revendications 1 et 2,
**caractérisé en ce que**
la cuve (1) comprend une paroi latérale (3) à plan de sol circulaire ou plan de sol polygonal à au moins quatre bords et la cloison (4) entre le labyrinthe de débit traversier vertical non aéré (7) et le bassin aéré de boues activées (8) est disposée de manière concentrique avec un plan de sol circulaire ou un plan de sol polygonal à au moins quatre bords, dans lequel le labyrinthe de débit traversier vertical non aéré (7) comprend une série d'au moins six cloisons internes (12) disposée en rayon dans la direction du flux actif.

4. Dispositif selon les revendications 1 à 3,
**caractérisé en ce que**
la cuve (1) comprend une paroi latérale (3) à plan de sol rectangulaire et le labyrinthe de débit traversier vertical non aéré (7) comprend au moins deux rangées parallèles de cloisons internes (12), séparées par un mur guide (30), avec une série de cloisons internes (12), du bas (2) de la cuve jusqu'à une hauteur supérieure au niveau maximal B donné par le niveau d'un trop-plein de sécurité (29), et qui dispose d'un orifice de passage (13) situé soit au niveau du bas (2) du la cuve (1) soit à la hauteur du niveau A minimal donnée par la conduite de sortie (11) dans la direction du flux actif, avec un mur guide (30) du bas (2) de la cuve jusqu'à une hauteur supérieure au niveau maximal B donné par le niveau d'un trop-plein de sécurité (29).

5. Dispositif selon les revendications 1 à 4,
**caractérisé en ce que**
le matériau qui compose le bas (2), les parois latérales (3) et les cloisons (4) entre le labyrinthe de débit traversier vertical non aéré (7) et le bassin aéré de boues activées (8) et celle du mur guide (30) correspond à un élément de paroi en ciment étanche et/ou en plastique de construction, et le matériau qui compose les cloisons internes (12) et la coque (5) correspond à un élément de paroi en plastique de construction.

6. Dispositif selon les revendications 1 à 5,
**caractérisé en ce que**
le tamis (18) destiné aux impuretés grossières à l'orifice d'entrée (16) du régulateur de flux (14) est lavé par inversion de courant par le biais de l'eau traitée accumulée à l'intérieur du régulateur de flux (14) entre la coque (15) du régulateur de flux (14) et la conduite de passage (20) au moyen d'un soufflage périodique du milieu fluide sous pression sur le régulateur de flux (14).

7. Dispositif selon les revendications 6,
**caractérisé en ce que**
le milieu fluide pressurisé est composé d'air comprimé ou d'air sous pression.
